# EUROPÄISCHE PATENTSCHRIFT

(11) **EP 2 313 238 B1**
(45) Veröffentlichungstag und Bekanntmachung des Hinweises auf die Patenterteilung: **09.09.2015**
(21) Anmeldenummer: 09777274.3
(22) Anmeldetag: 17.07.2009
(51) Int. Cl.: B25D 9/10, B25D 17/26

(54) **SCHLAGGERÄT MIT SCHLAGWERK-SCHMIERVORRICHTUNG**
IMPACT DEVICE HAVING AN IMPACT MECHANISM LUBRICATING DEVICE
APPAREIL DE PERCUSSION PRÉSENTANT UN DISPOSITIF DE LUBRIFICATION D'UN MÉCANISME DE PERCUSSION

(30) Priorität: 28.07.2008 DE 102008035084
(43) Veröffentlichungstag der Anmeldung: 27.04.2011
(73) Patentinhaber: Wacker Neuson Produktion GmbH & Co. KG, 80809 München (DE)
(72) Erfinder: BRAUN, Helmut, 85232 Bergkirchen (DE); ZINSMEISTER, Manfred, 82256 Fürstenfeldbruck (DE)
(74) Vertreter: Müller Hoffmann & Partner
(86) Internationale Anmeldenummer: PCT/EP2009/005220
(87) Internationale Veröffentlichungsnummer: WO 2010/012390

(56) Entgegenhaltungen:
- GB-A- 622 709
- US-A- 2 121 706
- US-A- 2 545 999
- US-A- 3 642 077

## Beschreibung

Die Erfindung betrifft ein Schlaggerät gemäß dem Oberbegriff von Anspruch 1.

Schlaggeräte, z.B. Benzin-Aufbruchhämmer sind bekannt. Ein derartiges Schlaggerät weist einen Verbrennungsmotor auf, der ein Schlagwerk antreibt, mit dem ein Werkzeug, z.B. ein Meißel, beaufschlagt werden kann. Das Schlaggerät weist dabei neben einer Schmiervorrichtung für den Verbrennungsmotor ein weiteres Schmiersystem für das Schlagwerk auf. Die Schlagwerk-Schmiersysteme können unterschiedlich konzipiert sein. So sind Systeme zur Verlustschmierung bekannt, bei denen Schmiermittel verbraucht wird. Ebenso gibt es abgeschlossene Systeme, die einmalig mit einem Schmiermittel befüllt werden, welches für die Lebensdauer des Schlagwerks oder für ein Wartungsintervall ausreicht. Schlagwerke können z.B. mit Fett, aber auch durch eine Ölschmierung geschmiert werden.

Darüber hinaus ist z.B. aus der WO 03/053639 A1 ein Schmiersystem zur bedarfsgerechten Schmierung bekannt.

Systeme zur dosierten oder bedarfsgerechten Verlustschmierung erfordern einen erhöhten konstruktiven Aufwand. Bei Schlagwerken hingegen, die nicht durch eine Verlustschmierung sondern durch eine Schmierung mit abgeschlossenem System versorgt werden, ist ein erhöhter Aufwand zur Abdichtung des Gehäuses erforderlich. Zudem muss eine regelmäßige Wartung durchgeführt werden, um Dichtungen und das verbrauchte Schmiermittel zu wechseln.

Aus der US-A-2,121,706 ist ein Schlaggerät mit einem Verbrennungsmotor und einem Schlagwerk bekannt. Mit Hilfe einer Ölpumpe wird Öl aus einem Ölvorratsbehälter über eine Leitung zu verschiedenen Komponenten des Verbrennungsmotors geführt. Ein Teil des Öls wird in dem Verbrennungsmotor gesammelt und über den Kurbelraum des Verbrennungsmotors zu dem Schlagwerk weitergeleitet, wo es daraufhin das Schlagwerk schmieren kann.

Der Erfindung liegt die Aufgabe zugrunde, eine bedarfsgerechte oder dosierende Verlust-Schmierung für ein Schlagwerk bei minimalem konstruktivem Zusatzaufwand bereitzustellen.

Die Aufgabe wird erfindungsgemäß durch ein Schlaggerät mit den Merkmalen von Anspruch 1 gelöst. Ausgestaltungen der Erfindung sind in den abhängigen Ansprüchen angegeben.

Ein Schlaggerät mit einem Verbrennungsmotor, einem von dem Verbrennungsmotor angetriebenen Schlagwerk, einer Motor-Schmiervorrichtung zum Lagern und Zuführen von Schmiermittel für den Verbrennungsmotor und einer Schlagwerk-Schmiervorrichtung zum Lagern und Zuführen von Schmiermittel für das Schlagwerk ist dadurch gekennzeichnet, dass die Motor-Schmiervorrichtung und die Schlagwerk-Schmiervorrichtung wenigstens teilweise die selben Komponenten aufweisen.

Dadurch ist es möglich, dass die beiden Schmiervorrichtungen teilweise identisch sind und zumindest teilweise die selben Komponenten nutzen. Anders formuliert bedeutet das, dass ein Schmiersystem vorgesehen ist, das gleichermaßen den Verbrennungsmotor und das Schlagwerk mit Schmiermittel versorgt. Insbesondere kann auf diese Weise die Schmiervorrichtung des Verbrennungsmotors zusätzlich auch dazu genutzt werden, das Schlagwerk zu schmieren. Eine eigenständige Schmiervorrichtung für das Schlagwerk ist dann nicht mehr erforderlich. Ein und das selbe System kann auf diese Weise zur Schmierung des Motors und des Schlagwerks dienen. Die Fördermengen sind jeweils so gering, dass die Förderung des gesamten Schmiermittels, insbesondere wenn es sich um Öl handelt, kein Problem darstellt.

Die Komponenten, die dabei gemeinsam genutzt werden können sind insbesondere ein Vorratsbehälter (Tank) zum Lagern des Schmiermittels, das Schmiermittel selbst, eine Fördereinrichtung zum Fördern des Schmiermittels, ein Antrieb der Fördereinrichtung sowie eine Schmiermittelführung zum Führen und Leiten des Schmiermittels. Je nach Ausgestaltung des Schmiersystems müssen diese Komponenten in dem Schlaggerät nur einmal bereitgestellt werden und können dann sowohl zur Schmierung des Motors als auch des Schlagwerks genutzt werden. Die Fördereinrichtung kann eine Pumpe aufweisen. Ebenso kann die Fördereinrichtung auch eine Förderung mit Schwerkraftunterstützung, Federvorspannung (federvorgespannter Kolben) etc. bewirken.

Das Schlagwerk kann sehr einfach mit einer bedarfsgerechten Verlust-Schmierung ausgestattet werden, indem die üblicherweise bereits vorhandene Getrennt-Schmierung des Verbrennungsmotors auch das Schlagwerk mit Schmiermittel versorgt. Auf diese Weise kann auch auf eine aufwändige Abdichtung des Schlagwerkes verzichtet werden. Insbesondere müssen keine Bauteile gegeneinander abgedichtet werden, die sich mit hoher Geschwindigkeit relativ zueinander bewegen, wie z.B. ein Schlagkolben oder ein Döpper. Dementsprechend können keine Probleme durch einen Dichtungsverschleiß auftreten.

Es ist möglich, das als Schmiermittel dienende Öl jeweils nur in geringen Mengen von oben in das Schlagwerk einzutröpfeln, so dass sich im Schlagwerk immer nur genau die Menge an Öl befindet, die zum Schmieren der Bauelemente benötigt wird. Dadurch muss das Schlagwerk nicht nach unten abgedichtet werden.

Dabei ist zu beachten, dass derartige Schlaggeräte häufig zum Arbeiten nach unten, z.B. zum Aufbrechen eines Betonfundaments oder eines Straßenbelags, eingesetzt werden. Dadurch befindet sich das Schlaggerät, also z.B. ein Benzin-Aufbruchhammer meist in einer senkrechten Arbeitsstellung, in der er nach unten arbeitet. Schmutz und Abrieb können durch das Öl aus dem Schlagwerk nach unten in Richtung eines Einsteckendes für das Werkzeug herausgefördert werden. Das Einsteckende wird auf diese Weise gleich mitgeschmiert.

Eine Überfettung des Schlagwerks ist nicht möglich, da überschüssiges, also nicht an den Bauelementen des Schlagwerks anhaftendes Öl sofort nach unten ausgelassen wird, weil es nicht durch irgendwelche Dichtungen zurückgehalten werden kann.

Dadurch, dass das Schlagwerk stets mit frischem Öl versorgt wird, ist eine Wartung nicht erforderlich. Zudem erleichtert Öl einen schnellen Kaltanlauf bei niedrigen Temperaturen, bei denen sich Fett hingegen als sehr zäh und eher hinderlich erweist.

Dadurch, dass das Öl des Verbrennungsmotors gleichzeitig zur Schmierung des Schlagwerks genutzt wird, kann auch ein Ölmangel rechtzeitig erkannt, werden, da üblicherweise bereits eine Ölstandsanzeige im Tank vorhanden ist.

Zudem besteht die Möglichkeit, dass eine Steuereinrichtung bei Ölmangel das Gerät abschaltet. Ein zusätzlicher Schmiermittelvorrat für die Schmierung des Schlagwerks ist nicht erforderlich.

Die Motor-Schmiervorrichtung und die Schlagwerk-Schmiervorrichtung können eine gemeinsame Fördereinrichtung aufweisen, wobei stromab von der Fördereinrichtung eine Verteileinrichtung vorgesehen ist, zum Zuführen von Schmiermittel zu dem Schlagwerk und / oder zu dem Verbrennungsmotor. Bei dieser Variante wird somit die gemeinsame Fördereinrichtung, also z.B. eine gemeinsame Pumpe dazu genutzt, gleichermaßen das Schlagwerk und den Verbrennungsmotor mit Schmiermittel zu versorgen.

Die Verteileinrichtung kann einen Mengenstromteiler zum kontinuierlichen Verteilen des von der Fördereinrichtung geförderten Schmiermittelstroms und/oder eine Wechseleinrichtung zum wechselnden Verteilen eines von der Fördereinrichtung geförderten Schmiermittelstroms zu dem Verbrennungsmotor oder zu dem Schlagwerk aufweisen. Der Mengenstromteiler teilt somit den Schmiermittelstrom in einem bestimmten vorgegebenen oder auch variablen Verhältnis, so dass gleichzeitig Schmiermittel zum Verbrennungsmotor und zum Schlagwerk gelangt. Bei der Wechseleinrichtung hingegen wird der Schmiermittelstrom abwechselnd ausschließlich zum Verbrennungsmotor oder zum Schlagwerk geführt. Durch die Zeitdauer der jeweiligen Zuführung kann das Mengenverhältnis eingestellt werden. So wird es in der Praxis erforderlich sein, dass überwiegend der Verbrennungsmotor Schmiermittel erhält, während dem Schlagwerk nur gelegentlich, z.B. in bestimmten zeitlichen Abständen Schmiermittel zugeführt wird.

Die Motor-Schmiervorrichtung und die Schlagwerk-Schmiervorrichtung können bei einer Ausführungsform jeweils. einen eigenen Vorratsbehälter zum Lagern von Schmiermittel aufweisen. Dies kann insbesondere dann notwendig sein, wenn der Motor ein anderes Schmiermittel benötigt als das Schlagwerk. Auch in diesem Fall jedoch kann eine gemeinsame Fördereinrichtung vorgesehen sein, wobei zwischen den beiden Vorratsbehältern und der gemeinsamen Fördereinrichtung eine Wechseleinrichtung angeordnet ist, zum wechselweisen Verbinden der Fördereinrichtung mit einem der Vorratsbehälter. Auf diese Weise kann z.B. die Pumpe abwechselnd mit dem einen und danach mit dem anderen Vorratsbehälter verbunden werden.

Stromab von der gemeinsamen Fördereinrichtung und stromauf von dem Verbrennungsmotor und dem Schlagwerk kann dann eine weitere Wechseleinrichtung angeordnet sein, um das jeweils aus einem der Vorratsbehälter entnommene Schmiermittel zu dem gewünschten Ziel zu fördern.

Dabei können die beiden Wechseleinrichtungen koordiniert derart schaltbar sein, dass das Schmiermittel aus dem Vorratsbehälter der Motor-Schmiervorrichtung zu dem Verbrennungsmotor und das Schmiermittel aus dem Vorratsbehälter der , Schlagwerk-Schmiervorrichtung zu dem Schlagwerk führbar ist. Die Wechseleinrichtungen werden dementsprechend gleichzeitig geschaltet, um jeweils individuelle Schmiermittelströme für den Motor und das Schlagwerk zu realisieren. Die gemeinsame Fördereinrichtung wird jedoch in beiden Fällen gleichermaßen genutzt.

Die Wechseleinrichtung bzw. gegebenenfalls beide Wechseleinrichtungen können in Abhängigkeit von verschiedenen Parametern ansteuerbar sein. Z.B. kann die Wechseleinrichtung zeitgesteuert oder in Abhängigkeit von einer Temperatur (Motortemperatur, Schlagwerkstemperatur oder eine andere aussagekräftige Temperatur) gesteuert werden. Ebenso ist es möglich, eine Motorlast, eine Drehzahl des Motors oder eine Stellung einer Drosselklappe in dem Verbrennungsmotor als Kriterium zu nutzen. Ebenso kann auch eine vom Bediener auf das Schlaggerät aufgebrachte Kraft als relevantes Kriterium genutzt werden, die in geeigneter Weise durch einen Kraftdetektor, z.B. am Handgriff des Schlaggeräts, erfasst werden kann.

Bei einer Ausführungsform können die Motor-Schmiervorrichtung und die Schlagwerk-Schmiervorrichtung einen gemeinsamen Vorratsbehälter aufweisen, wobei die Motor-Schmiervorrichtung und die Schlagwerk-Schmiervorrichtung jeweils eine eigene Fördereinrichtung nutzen. Die jeweils eigene Fördereinrichtung wiederum kann mit einem eigenen Antrieb versehen sein. Alternativ kann auch ein gemeinsamer Antrieb beide Fördereinrichtungen antreiben.

Die Leistung der Fördereinrichtung kann in Abhängigkeit von einer Last des Verbrennungsmotors steuerbar sein. Dadurch lässt sich die Schmiermittelmenge bedarfsgerecht in Abhängigkeit von der tatsächlichen Belastung des Motors einstellen. Da davon auszugehen ist, dass bei einer erhöhten Motorbelastung auch eine erhöhte Belastung des Schlagwerks vorliegt, kann somit auch das Schlagwerk bedarfsgerecht geschmiert werden.

Die Fördereinrichtung kann durch einen eigenen Antrieb oder durch den Verbrennungsmotor antreibbar sein.

Das Öl für den Verbrennungsmotor kann bedarfsgerecht, z.B. leistungsabhängig, gefördert werden, so dass dann auch automatisch das Schlagwerk bedarfsgerecht mit Öl versorgt wird, und zwar abhängig vom jeweiligen Betriebszustand.

Auf diese Weise lässt sich sehr einfach eine bedarfsgerechte Verlust-Schmierung für ein Schlagwerk vorsehen, bei dem die Getrennt-Schmierung des Motors auch das Schlagwerk mit versorgt.

Das Schlagwerk kann ein Getriebe aufweisen, das zum Wandeln einer Drehbewegung des Verbrennungsmotors in eine axiale Hin- und Herbewegung dient, wobei das Getriebe durch die Schlagwerk-Schmiervorrichtung geschmiert wird. Ein derartiges Getriebe ist bekannt und kann z.B. einen Kurbeltrieb umfassen, mit dem ein zu dem Schlagwerk gehörender Antriebskolben angetrieben wird, dessen Hin- und Herbewegung wiederum auf einen Schlagkolben übertragen wird. Insbesondere bei Luftfederschlagwerken wird dieses Antriebsprinzip genutzt.

Das Getriebe kann - wie oben gesagt von der Schlagwerk-Schmiervorrichtung mitgeschmiert werden. Es ist aber auch möglich, für das Getriebe eine eigene, von der Schlagwerk-Schmiervorrichtung unabhängige Schmierung, z.B. eine Fettschmierung, vorzusehen.

Der Verbrennungsmotor kann ein Zweitakt- oder ein Viertaktmotor sein. Wie sich aus Obigem ergibt, wird die dabei bereits vorhandene Motor-Schmiervorrichtung dazu genutzt, zusätzlich auch noch das Schlagwerk mit Schmiermittel zu versorgen.

Das Schlaggerät kann eine Werkzeughalterung aufweisen, in die ein von dem Schlagwerk beaufschlagbares Werkzeug einsetzbar ist. Bei geeigneter Gestaltung des Schlagwerks und der Schmiervorrichtung für das Schlagwerk ist es möglich, auch die Werkzeughalterung, insbesondere ein dafür vorgesehenes Einsteckende mit Schmiermittel zu versorgen.

Diese und weitere Vorteile und Merkmale der Erfindung werden nachfolgend anhand von Beispielen unter Zuhilfenahme der begleitenden Figuren näher erläutert. Es zeigen:
- **Fig. 1**: eine schematische Seitenansicht eines Schlaggeräts;
- **Fig. 2**: ein Blockschaltbild mit dem Wirkprinzip der Schmierung des Schlagwerks von Fig. 1;
- **Fig. 3**: ein Blockschaltbild mit einem anderen Wirkprinzip;
- **Fig. 4**: ein Blockschaltbild mit einem wiederum anderen Wirkprinzip; und
- **Fig. 5**: ein Blockschaltbild mit einem weiteren Schmiersystem.

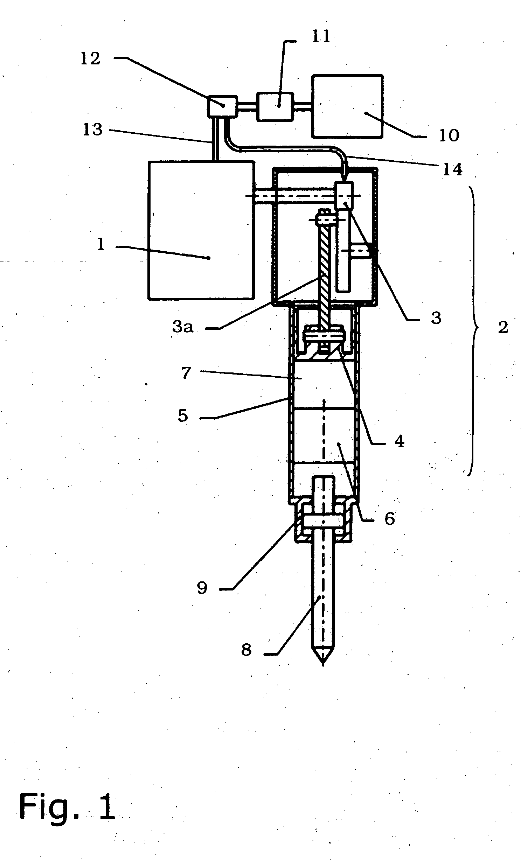

Fig. 1 zeigt in schematischer Seitenansicht ein Schlaggerät in Form eines Benzinhammers mit einer gemeinsamen Schmierung von Schlagwerk und Zweitakt-Motor.

Ein als Zweitakt-Verbrennungsmotor ausgeführter Motor 1 treibt über ein zu einem Schlagwerk 2 gehörendes Getriebe 3 und einen Kurbeltrieb mit einem Pleuel 3a einen Antriebskolben 4 hin und her. Vor dem Antriebskolben 4 ist in einem Führungszylinder 5 ein Schlagkolben 6 ebenfalls axial hin- und herbeweglich. Dadurch, dass sich zwischen dem Antriebskolben 4 und dem Schlagkolben 6 eine Luftfeder 7 ausbildet, wird die Bewegung des Antriebskolbens 4 zeitlich verzögert auf den Schlagkolben 6 übertragen, der sich dann frei in Richtung des Endes eines als Meißel ausgeführten Werkzeugs 8 bewegen kann. Das Werkzeug 8 ist in einem Werkzeughalter 9 gehalten. Der Schlagkolben 6 schlägt gegen das Einsteckende des Werkzeugs 8 und erzeugt so die gewünschte Arbeitswirkung.

Dieses so genannte Luftfederschlagwerk (zusammenfassend mit Bezugszeichen 2 gekennzeichnet) ist bekannt und hat sich in der Praxis seit langem bewährt. Ohne Weiteres sind aber auch andere Schlagwerkstypen bekannt bzw. denkbar, bei denen das hier in Rede stehende Schmiersystem verwendet werden kann.

Das Schmiersystem weist einen als Vorratsbehälter dienenden Öltank 10 zur Bevorratung von Öl auf. Das Öl wird durch eine als Fördereinrichtung dienende Pumpe 11 aus dem Öltank 10 gefördert.

Stromab von der Pumpe 11 ist ein als Verteileinrichtung dienender Verteiler 12 vorgesehen, so dass das Öl über eine als Schmiermittelführung dienende Leitung 13 zum Motor 1 und über eine ebenfalls als Schmiermittelführung dienende Leitung 14 zum Schlagwerk 2 geführt wird.

Der Motor 1 kann auf diese Weise in an sich bekannter, bewährter Weise geschmiert werden. Zusätzlich wird aber das für den Motor 1 bei Getrennt-Schmierung bereits vorhandene Schmiersystem dazu genutzt, auch das Schlagwerk 2 zu schmieren.

Als Bestandteil des Schlagwerks 2 wird hierbei bereits auch das Getriebe 3 angesehen, welches direkt über die Leitung 14 mit Öl geschmiert wird. So kann das Öl aus der Leitung 14 heraustropfen und unmittelbar auf die Zahnräder des Getriebes 3 gelangen. Das danach herabtropfende Öl gelangt - bei senkrechter Arbeitshaltung des in Fig. 1 gezeigten Schlaggeräts - weiter nach unten in den Bereich des Antriebskolbens 4 und weiter zum Schlagkolben 6 und schließlich zum Werkzeughalter 9. wo das Einsteckende des Werkzeugs 8 mit geschmiert wird.

Der Verteiler 12 kann in Form eines Mengenteilers ausgebildet sein, bei dem kontinuierlich Öl gleichzeitig über die Leitung 13 zum Motor 1 und über die Leitung 14 zum Getriebe 2 geführt wird. Dabei ist es möglich, beliebige Mengenverhältnisse konstant oder auch variabel einzustellen.

Alternativ dazu kann der Verteiler 12 auch ein Wechselventil aufweisen, das zeitweilig zwischen den Leitungen 13 und 14 hin- und herschaltet. Das Wechselventil kann z.B. zeitgesteuert werden und/oder durch Zustände wie Temperatur, Last, Drehzahl, Bedienkraft, Drosselklappenstellung oder ähnliches angesteuert werden.

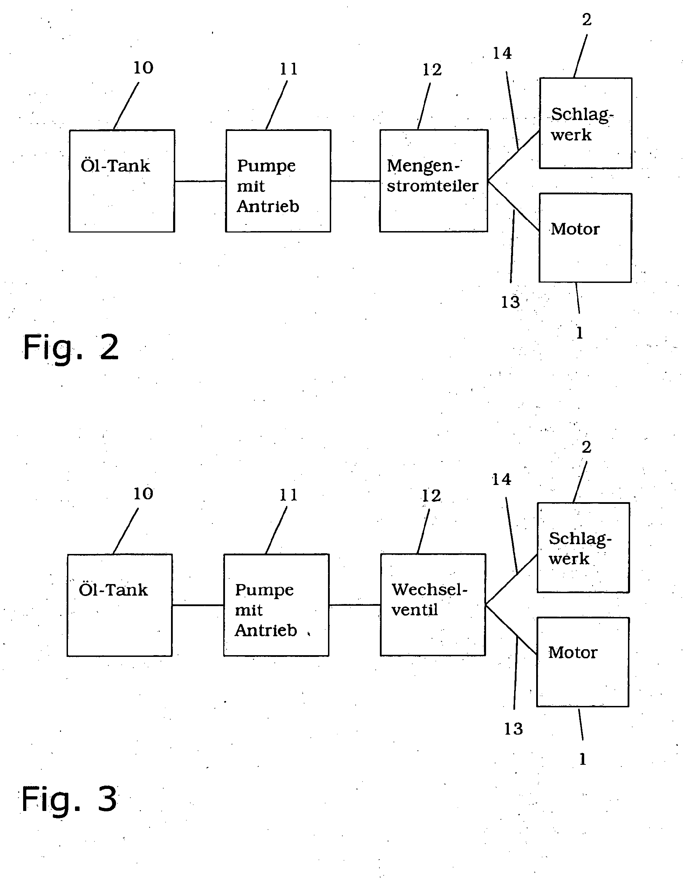

Die Fig. 2 und 3 zeigen die beiden Alternativen in Form von zwei Blockschaltbildern, wobei der Verteiler 12 entweder als Mengenstromteiler oder Wechselventil gekennzeichnet ist. Daraus ist ersichtlich, dass die Motor-Schmiervorrichtung und die Schlagwerk-Schmiervorrichtung weitgehend die selben Komponenten nutzen. Erst nach dem Verteiler 12 teilt sich der Schmiermittelstrom auf.

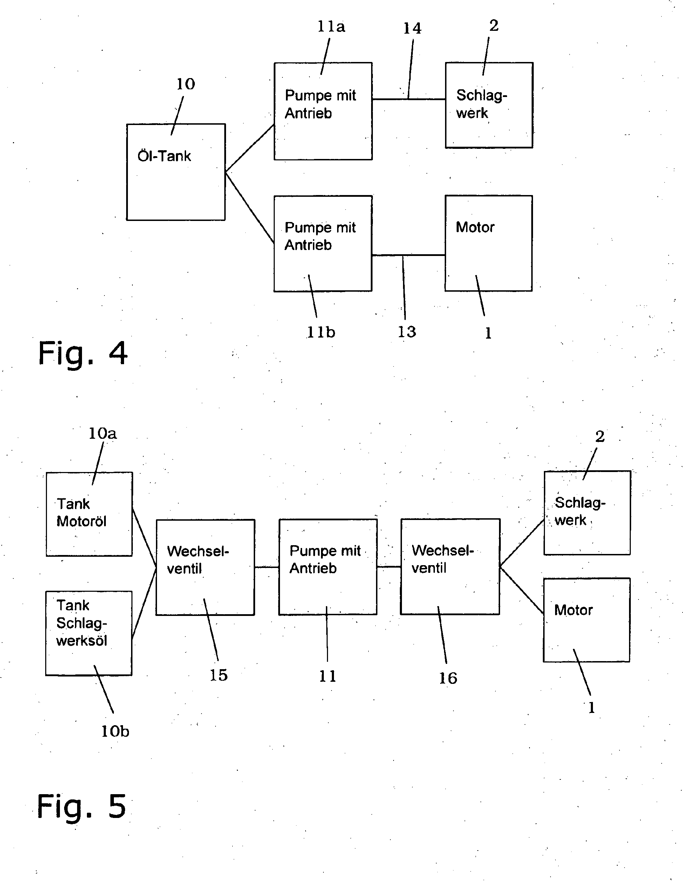

In Fig. 4 wird eine Variante gezeigt, bei dem zwei Pumpen 11a und 11b vorgesehen sind, die jeweils Öl aus dem gemeinsamen Öltank 10 beziehen und dem Schlagwerk 2 bzw. dem Motor 1 zuführen.

Dabei wird nur der Öltank 10 doppelt verwendet. Der Antrieb der Pumpen 11a und 11b kann jedoch gemeinsam genutzt werden. Alternativ kann auch jede der Pumpe 11a, 11b gesondert angetrieben werden.

Fig. 5 zeigt eine Ausführungsform, bei der für das für den Motor 1 dienende Schmiermittel, nämlich Motoröl ein Tank 10a und für das als Schmiermittel für das Schlagwerk dienende Schlagwerksöl ein Tank 10b vorgesehen ist. Dieser Fall kann dann sinnvoll sein, wenn das Schlagwerk 2 und der Motor 1 jeweils mit einem speziellen Öl versorgt werden müssen. Stromab von den Tanks 10a. und 10b ist ein Wechselventil 15 vorgesehen, das abwechselnd zwischen den Tanks 10a und 10b hin- und herschaltet. Weiterhin ist eine gemeinsame Pumpe 11 und ein Wechselventil 16 vorgesehen.

Durch geeignete Ansteuerung der Wechselventile 15 und 16 ist es möglich, wahlweise Motoröl aus dem Tank 10a zum Motor 1 und Schlagwerksöl aus dem Tank 10b zum Schlagwerk 2 zu fördern. Dabei werden die beiden Wechselventile 15, 16 und die Pumpe 11 gemeinsam genutzt. Gegebenenfalls müssen die Leitungen in dem gemeinsam genutzten Bereich zwischen dem Umschalten geleert werden.

Die das Schmiermittel bevorratenden Öltanks 10 bzw. 10a und 10b können mit einer Füllstandsanzeige ausgestattet sein, so dass ein Ölmangel rechtzeitig angezeigt wird. Ebenso besteht die Möglichkeit, dass das Schlaggerät bei Ölmangel rechtzeitig abgeschaltet wird.

## Patentansprüche

1. Schlaggerät, mit
- einem Verbrennungsmotor (1);
- einem von dem Verbrennungsmotor (1) angetriebenen Schlagwerk (2);
- einer Motor-Schmiervorrichtung zum Lagern und Zuführen von Schmiermittel für den Verbrennungsmotor (1); und mit
- einer Schlagwerk-Schmiervorrichtung zum Lagern und Zuführen von Schmiermittel für das Schlagwerk (2);
**dadurch gekennzeichnet, dass**
- die Motor-Schmiervorrichtung eine Leitung (13), zum Zuführen von Schmiermittel zu dem Verbrennungsmotor (1) aufweist;
- die Schlagwerk-Schmiervorrichtung eine von der Leitung (13) zum Zuführen von Schmiermittel zu dem Verbrennungsmotor (1) getrennte Leitung (14) zum Zuführen von Schmiermittel zu dem Schlagwerk (2) aufweist; und dass
- die Motor-Schmiervorrichtung und die Schlagwerk-Schmiervorrichtung wenigstens teilweise die selben Komponenten (10, 11, 12, 15, 16) aufweisen.

2. Schlaggerät nach Anspruch 1, **dadurch gekennzeichnet, dass** die Komponenten ausgewählt sind aus der Gruppe:
- Vorratsbehälter (10) zum Lagern des Schmiermittels,;
- Schmiermittel;
- Fördereinrichtung (11) zum Fördern des Schmiermittels;
- Antrieb der Fördereinrichtung;
- Schmiermittelführung (12, 15, 16) zum Führen und Leiten des Schmiermittels.

3. Schlaggerät nach einem der Ansprüche 1 oder 2, **dadurch gekennzeichnet, dass**
- die Motor-Schmiervorrichtung und die Schlagwerk-Schmiervorrichtung eine gemeinsame Fördereinrichtung (11) aufweisen; und dass
- stromab von der Fördereinrichtung (11) eine Verteileinrichtung (12, 16) vorgesehen ist, zum Zuführen von Schmiermittel zu dem Schlagwerk (2) und/oder zu dem Verbrennungsmotor (1).

4. Schlaggerät nach einem der Ansprüche 1 bis 3, **dadurch gekennzeichnet, dass** die Verteileinrichtung (12, 16) einen Mengenstromteiler zum kontinuierlichen Verteilen eines von der Fördereinrichtung (11) geförderten Schmiermittelstroms und/oder eine Wechseleinrichtung zum wechselnden Verteilen eines von der Fördereinrichtung (11) geförderten Schmiermittelstroms zu dem Verbrennungsmotor (1) oder zu dem Schlagwerk (2) aufweist.

5. Schlaggerät nach einem der Ansprüche 1 bis 4, **dadurch gekennzeichnet, dass**
- die Motor-Schmiervorrichtung und die Schlagwerk-Schmiervorrichtung jeweils einen eigenen Vorratsbehälter (10a, 10b) zum Lagern von Schmiermittel aufweisen;
- zwischen den Vorratsbehältern (10a, 10b) und der gemeinsamen Fördereinrichtung (11) eine Wechseleinrichtung (15) angeordnet ist, zum wechselweisen Verbinden der Fördereinrichtung (11) mit einem der Vorratsbehälter (10a, 10b); und dass
- stromab von der gemeinsamen Fördereinrichtung (11) und stromauf von dem Verbrennungsmotor (1) und dem Schlagwerk (2) eine weitere Wechseleinrichtung (16) angeordnet ist.

6. Schlaggerät nach Anspruch 5, **dadurch gekennzeichnet, dass** die beiden Wechseleinrichtungen (15; 16) koordiniert derart schaltbar sind, dass das Schmiermittel aus dem Vorratsbehälter (10a) der Motor-Schmiervorrichtung zu dem Verbrennungsmotor (1) und dass das Schmiermittel aus dem Vorratsbehälter (10b) der Schlagwerk-Schmiervorrichtung zu dem Schlagwerk (2) führbar ist.

7. Schlaggerät nach einem der Ansprüche 1 bis 6, **dadurch gekennzeichnet, dass** die Wechseleinrichtung ansteuerbar ist in Abhängigkeit von
- der Zeit:
- einer Temperatur
- einer Motorlast;
- einer Drehzahl des Verbrennungsmotors (1);
- einer von einem Bediener auf das Schlaggerät aufgebrachten Kraft;
- einer Stellung einer Drosselklappe in dem Verbrennungsmotor (1).

8. Schlaggerät nach einem der Ansprüche 1 bis 7, **dadurch gekennzeichnet, dass**
- die Motor-Schmiervorrichtung und die Schlagwerk-Schmiervorrichtung einen gemeinsamen Vorratsbehälter (10) aufweisen; und dass
- die Motor-Schmiervorrichtung und die Schlagwerk-Schmiervorrichtung jeweils eine eigene Fördereinrichtung (11a, 11b) aufweisen.

9. Schlaggerät nach einem der Ansprüche 1 bis 8, **dadurch gekennzeichnet, dass** die Leistung der Fördereinrichtung (11) in Abhängigkeit von einer Last des Verbrennungsmotors (1) steuerbar ist.

10. Schlaggerät nach einem der Ansprüche 1 bis 9, **dadurch gekennzeichnet, dass** die Fördereinrichtung (11) durch einen eigenen Antrieb oder durch den Verbrennungsmotor (1) antreibbar ist.

11. Schlaggerät nach einem der Ansprüche 1 bis 10, **dadurch gekennzeichnet, dass**
- das Schlagwerk (2) ein Getriebe (3) aufweist, zum Wandeln einer Drehbewegung des Verbrennungsmotors (1) in eine axiale Hin- und Herbewegung; und dass
- die Schlagwerk-Schmiervorrichtung zum Schmieren des Getriebes (3) dient.

12. Schlaggerät nach einem der Ansprüche 1 bis 11, **dadurch gekennzeichnet, dass** der Verbrennungsmotor (1) ein Zweitaktoder ein Viertakt-Motor ist.

13. Schlaggerät nach einem der Ansprüche 1 bis 12, **dadurch gekennzeichnet, dass** eine Werkzeughalterung (9) vorgesehen ist, in die ein von dem Schlagwerk (2) beaufschlagbares Werkzeug (8) einsetzbar ist.

## Claims

1. Impact device, having:
- an internal combustion engine (1);
- an impact mechanism (2) driven by the internal combustion engine (1);
- an engine lubricating device for storing and supplying lubricant for the internal combustion engine (1); and having
- an impact mechanism lubricating device for storing and supplying lubricant for the impact mechanism (2);
**characterised in that**
- the engine lubricating device comprises a line (13) for supplying lubricant to the internal combustion engine (1);
- the impact mechanism lubricating device comprises a line (14), which is separate from the line (13) for supplying lubricant to the internal combustion engine (1), for supplying lubricant to the impact mechanism (2); and that
- the engine lubricating device and the impact mechanism lubricating device at least partially have the same components (10, 11, 12, 15, 16).

2. Impact device as claimed in claim 1, **characterised in that** the components are selected from the group consisting of:
- a storage container (10) for storing the lubricant;
- lubricant;
- a conveying device (11) for conveying the lubricant;
- a drive for the conveying device;
- a lubricant guide (12, 15, 16) for guiding and conducting the lubricant.

3. Impact device as claimed in any one of claims 1 or 2, **characterised in that**
- the engine lubricating device and the impact mechanism lubricating device have a common conveying device (11); and that
- a distributing device (12, 16) is provided downstream of the conveying device (11) in order to supply lubricant to the impact mechanism (2) and/or to the internal combustion engine (1).

4. Impact device as claimed in any one of claims 1 to 3, **characterised in that** the distributing device (12, 16) has a mass flow divider for continuously distributing a stream of lubricant conveyed by the conveying device (11), and/or a change-over device for alternating distribution of a stream of lubricant, which is conveyed by the conveying device (11), to the internal combustion engine (1) or to the impact mechanism (2).

5. Impact device as claimed in any one of claims 1 to 4, **characterised in that**
- the engine lubricating device and the impact mechanism lubricating device each have a dedicated storage container (10a, 10b) for storing lubricant;
- a change-over device (15) is disposed between the storage containers (10a, 10b) and the common conveying device (11), for alternating connection of the conveying device (11) to one of the storage containers (10a, 10b); and that
- a further change-over device (16) is disposed downstream of the common conveying device (11) and upstream of the internal combustion engine (1) and the impact mechanism (2).

6. Impact device as claimed in claim 5, **characterised in that** the two change-over devices (15, 16) can be switched in a coordinated manner such that the lubricant can be guided from the storage container (10a) of the engine lubricating device to the internal combustion engine (1), and that the lubricant can be guided from the storage container (10b) of the impact mechanism lubricating device to the impact mechanism (2).

7. Impact device as claimed in any one of claims 1 to 6, **characterised in that** the change-over device can be actuated in dependence upon:
- the time;
- a temperature;
- an engine load;
- a rotational speed of the internal combustion engine (1);
- a force applied to the impact device by an operator;
- a position of a throttle valve in the internal combustion engine (1).

8. Impact device as claimed in any one of claims 1 to 7, **characterised in that**
- the engine lubricating device and the impact mechanism lubricating device have a common storage container (10); and that
- the engine lubricating device and the impact mechanism lubricating device each have a dedicated conveying device (11a, 11b).

9. Impact device as claimed in any one of claims 1 to 8, **characterised in that** the power of the conveying device (11) can be controlled in dependence upon a load of the internal combustion engine (1).

10. Impact device as claimed in any one of claims 1 to 9, **characterised in that** the conveying device (11) can be driven by a dedicated drive or by the internal combustion engine (1).

11. Impact device as claimed in any one of claims 1 to 10, **characterised in that**
- the impact mechanism (2) has a transmission (3) for converting a rotational movement of the internal combustion engine (1) into an axial reciprocating movement; and that
- the impact mechanism lubricating device serves to lubricate the transmission (3).

12. Impact device as claimed in any one of claims 1 to 11, **characterised in that** the internal combustion engine (1) is a two-stroke engine or a four-stroke engine.

13. Impact device as claimed in any one of claims 1 to 12, **characterised in that** a tool holder (9) is provided, into which a tool (8) which can be acted upon by the impact mechanism (2) can be inserted.

## Revendications

1. Appareil de frappe avec
- un moteur à combustion (1) ;
- un dispositif de frappe (2) entraîné par le moteur à combustion (1) ;
- un dispositif de lubrification du moteur pour le stockage et l'alimentation en lubrifiant du moteur à combustion (1) ; et avec
- un dispositif de lubrification du dispositif de frappe pour le stockage et l'alimentation en lubrifiant du dispositif de frappe (2) ;
**caractérisé en ce que**
- le dispositif de lubrification du moteur comprend une conduite (13) pour l'alimentation en lubrifiant du moteur à combustion (1) ;
- le dispositif de lubrification du dispositif de frappe comprend une conduite (14) séparée de la conduite (13) pour l'alimentation en lubrifiant du moteur à combustion (1), pour l'alimentation en lubrifiant du dispositif de frappe (2) ; et **en ce que**
- le dispositif de lubrification du moteur et le dispositif de lubrification du dispositif de frappe comprennent au moins partiellement les mêmes composants (10, 11, 12, 15, 16).

2. Appareil de frappe selon la revendication 1, **caractérisé en ce que** les composants sont sélectionnés dans le groupe :
- réservoir (10) pour le stockage du lubrifiant ;
- lubrifiant ;
- dispositif de refoulement (11) pour le refoulement du lubrifiant ;
- entraînement du dispositif de refoulement ;
- guidage du lubrifiant (12, 15, 16) pour le guidage et la conduite du lubrifiant.

3. Appareil de frappe selon l'une des revendications 1 ou 2, **caractérisé en ce que**
- le dispositif de lubrification du moteur et le dispositif de lubrification du dispositif de frappe comprennent un dispositif de refoulement (11) commun ;
et **en ce que**
- en aval du dispositif de refoulement (11), est prévu un dispositif de distribution pour l'alimentation en lubrifiant du dispositif de frappe (2) et/ou du moteur à combustion (1).

4. Appareil de frappe selon l'une des revendications 1 à 3, **caractérisé en ce que** le dispositif de distribution (12, 16) comprend un diviseur de flux pour la distribution continue d'un flux de lubrifiant refoulé par le dispositif de refoulement (11) et/ou un dispositif de changement pour la distribution alternative d'un flux de lubrifiant refoulé par le dispositif de refoulement (11) vers le moteur à combustion (1) ou vers le dispositif de frappe (2).

5. Appareil de frappe selon l'une des revendications 1 à 4, **caractérisé en ce que**
- le dispositif de lubrification du moteur et le dispositif de lubrification du dispositif de frappe comprennent chacun son propre réservoir (10a, 10b) pour le stockage de lubrifiant ;
- entre les réservoirs (10a, 10b) et le dispositif de refoulement commun (11), se trouve un dispositif de changement (15), pour la liaison alternative du dispositif de refoulement (11) avec un réservoir (10a, 10b) ; et **en ce que**
- en aval du dispositif de refoulement commun (11) et en amont du moteur à combustion (1) et du dispositif de frappe (2), se trouve un autre dispositif de changement (16).

6. Appareil de frappe selon la revendication 5, **caractérisé en ce que** les deux dispositifs de changement (15, 16) sont commutables de manière coordonnée de façon à ce que le lubrifiant puisse être guidé hors du réservoir (10a) du dispositif de lubrification du moteur vers le moteur à combustion (1) et **en ce que** le lubrifiant puisse être guidé hors du réservoir (10b) du dispositif de lubrification du dispositif de frappe vers le dispositif de frappe (2).

7. Appareil de frappe selon l'une des revendications 1 à 6, **caractérisé en ce que** le dispositif de changement peut être piloté en fonction :
- du temps ;
- d'une température ;
- d'une charge de moteur ;
- d'une vitesse de rotation du moteur à combustion (1) ;
- d'une force exercée par un utilisateur sur le dispositif de frappe ;
- d'une position d'un clapet d'étranglement dans le moteur à combustion (1).

8. Appareil de frappe selon l'une des revendications 1 à 7, **caractérisé en ce que**
- le dispositif de lubrification du moteur et le dispositif de lubrification du dispositif de frappe comprennent un réservoir commun (10) ; et **en ce que**
- le dispositif de lubrification du moteur et le dispositif de lubrification du dispositif de frappe comprennent chacun leur propre dispositif de refoulement (11a, 11b).

9. Appareil de frappe selon l'une des revendications 1 à 8, **caractérisé en ce que** la puissance du dispositif de refoulement (11) peut être commandée en fonction d'une charge du moteur à combustion (1).

10. Appareil de frappe selon l'une des revendications 1 à 9, **caractérisé en ce que** le dispositif de refoulement (11) peut être entraîné par son propre entraînement ou par le moteur à combustion (1).

11. Appareil de frappe selon l'une des revendications 1 à 10, **caractérisé en ce que**
- le dispositif de frappe (2) comprend une transmission (3) pour la conversion d'une mouvement de rotation du moteur à combustion (1) en un mouvement de va et vient axial ; et **en ce que**
- le dispositif de lubrification du dispositif de frappe sert à lubrifier la transmission (3).

12. Appareil de frappe selon l'une des revendications 1 à 11, **caractérisé en ce que** le moteur à combustion (1) est un moteur à deux temps ou à quatre temps.

13. Appareil de frappe selon l'une des revendications 1 à 12, **caractérisé en ce qu'**un support d'outil (9) est prévu, dans lequel peut être inséré un outil (8) actionné par le dispositif de frappe (2).
